# FASCICULE DE BREVET EUROPEEN

(11) **EP 3 679 307 B1**
(45) Date de publication et mention de la délivrance du brevet: **06.11.2024**
(21) Numéro de dépôt: 18762342.6
(22) Date de dépôt: 07.09.2018
(51) Int. Cl.: F24H 9/00, F24D 11/00, F28D 21/00, F28G 3/16, F28D 1/06, F28D 7/02, F28D 7/10, E03C 1/00, F28D 20/00

(54) **SYSTÈME DE RÉCUPÉRATION DE CHALEUR DES EAUX USÉES**
SYSTEM ZUR RÜCKGEWINNUNG VON WÄRME AUS ABWASSER
SYSTEM FOR RECOVERING HEAT FROM WASTEWATER

(30) Priorité: 08.09.2017 FR 1758320
(43) Date de publication de la demande: 15.07.2020
(73) Titulaire: Biofluides, 77310 Saint-Fargeau-Ponthierry (FR)
(72) Inventeur: MOURÉ, Alain, 77930 CHAILLY EN BIERE (FR)
(74) Mandataire: Lavoix
(86) Numéro de dépôt international: PCT/EP2018/074229
(87) Numéro de publication internationale: WO 2019/048651

(56) Documents cités:
- FR-A1- 2 970 071
- FR-A1- 3 038 974
- GB-A- 2 510 794

## Description

La présente invention concerne le domaine des systèmes de récupération de chaleur des eaux usées.

Les eaux usées d'un bâtiment, telles que les eaux grises ou des eaux de refroidissement, contiennent des calories qui peuvent avantageusement être récupérées et valorisées ces calories, par exemple pour le chauffage du bâtiment lui-même. La récupération de la chaleur des eaux usées permet ainsi de limiter la consommation énergétique du bâtiment.

Le bâtiment peut être un bâtiment pour toute application, par exemple un bâtiment de bureaux, un bâtiment d'habitation, un hôtel ou un bâtiment industriel.

WO2010136681A2 divulgue un système de récupération de chaleur des eaux usées, le système de récupération de chaleur comprenant une cuve de rétention des eaux usées et des échangeurs de chaleurs plongés dans les eaux usées à l'intérieur la cuve de rétention et prévus pour la circulation d'un fluide caloporteur.

FR2970071A1 divulgue un réservoir de stockage des eaux grises dont la partie supérieure est entourée par un échangeur de chaleur comprenant une enveloppe déterminant un espace annulaire pour la circulation d'un fluide caloporteur, des ailettes d'échange thermique étant prévues dans l'espace annulaire pour être immergées dans le fluide caloporteur, ces ailettes pouvant être circulaires, en spirale ou droites.

Un des buts de l'invention est de proposer un système de récupération de chaleur des eaux usées dont l'efficacité soit améliorée.

A cet effet, l'invention propose un système de récupération de chaleur des eaux usées selon la revendication 1.

La cuve interne de rétention des eaux usées reçue dans une cuve externe de rétention d'un fluide caloporteur permet un échange de la chaleur efficace entre le fluide caloporteur et les eaux usées.

La cuve interne est plongée dans le fluide caloporteur retenu dans la cuve externe, et sensiblement toute la surface de la paroi latérale de la cuve externe peut servir de surface d'échange de chaleur entre les eaux usées et le fluide caloporteur, ce qui est bénéfique pour l'échange de chaleur.

Le conduit délimité dans la cuve interne force le fluide caloporteur retenu dans la cuve externe à circuler autour de la cuve interne avant de sortir de la cuve externe, ce qui évite des trajets préférentiels du fluide caloporteur dans la cuve externe et favorise l'échange de chaleur.

Des caractéristiques optionnelles sont définies aux revendications 2 à 11.

L'invention et ses avantages seront mieux compris à l'étude de la description qui va suivre, données uniquement à titre d'exemple non limitatif, et faite en référence aux dessins annexés, sur lesquels :
- la Figure 1 est une vue schématique en coupe du système de récupération de chaleur, suivant un plan de coupe vertical ; et
- la Figure 2 est une vue schématique de dessus du système de récupération de chaleur, un couvercle du système de récupération de chaleur ayant été retiré.

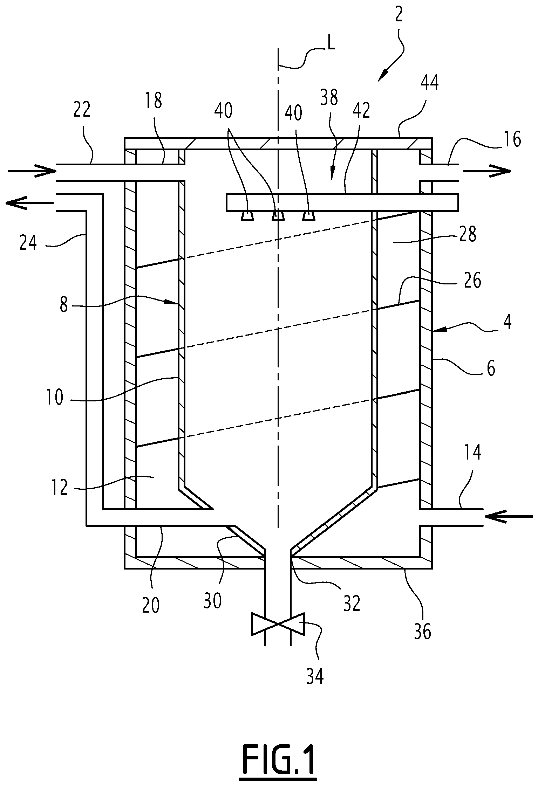

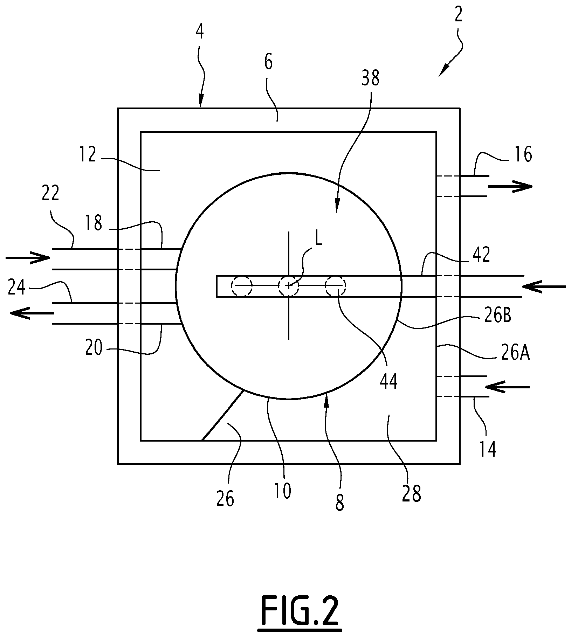

Le système de récupération de chaleur 2 illustré sur les Figures 1 et 2 est configuré pour la récupération de chaleur d'eaux usées d'un bâtiment, telles que les eaux grises ou des eaux de refroidissement du bâtiment, par échange de chaleur entre les eaux usées et un fluide caloporteur.

Le bâtiment est prévu pour une application quelconque. Il s'agit par exemple d'un bâtiment de bureaux, d'un bâtiment d'habitation, d'un hôtel ou d'un bâtiment industriel.

Le système de récupération de chaleur 2 comprend une cuve externe 4 de rétention du fluide caloporteur, présentant une paroi latérale 6, et une cuve interne 8 de rétention des eaux usées, présentant une paroi latérale 10, la cuve interne 8 étant disposée à l'intérieur de la cuve externe 4, pour un échange de chaleur entre le fluide caloporteur retenu dans la cuve externe 4 et les eaux usées retenues dans la cuve interne 8, à travers la paroi latérale 10 de la cuve interne 8.

Le système de récupération de chaleur 2 comprend un espace de rétention 12 annulaire délimité à l'intérieur de la cuve externe 4, entre la paroi latérale 6 de la cuve externe 4 et la paroi latérale 10 de la cuve interne 8. L'espace de rétention 12 entoure la cuve interne 8.

Le fluide caloporteur retenu dans la cuve externe 4 remplit l'espace de rétention 12. Lorsque la cuve externe 4 est remplie de fluide caloporteur, la cuve interne 8 est plongée dans le fluide caloporteur retenu dans la cuve externe 4.

La cuve externe 4 et la cuve interne 8 s'étendent suivant un axe longitudinal L. L'axe longitudinal L est par exemple sensiblement vertical.

La paroi latérale 6 de la cuve externe 4 s'étend suivant l'axe longitudinal L. La paroi latérale 6 de la cuve externe 4 est par exemple cylindrique.

La section transversale de la paroi latérale 6 de la cuve externe 4 est par exemple polygonale. Dans l'exemple illustré, la section transversale de la paroi latérale 6 de la cuve externe 4 est quadrangulaire, et plus précisément carrée.

La paroi latérale 10 de la cuve interne 8 s'étend suivant l'axe longitudinal L. La paroi latérale 10 de la cuve interne 8 est cylindrique suivant l'axe longitudinal L. Dans l'exemple illustré, la section transversale de la paroi latérale 10 de la cuve interne 8 est par exemple circulaire.

La cuve externe 4 possède une entrée pour le fluide caloporteur 14, pour l'entrée du fluide caloporteur dans la cuve externe 4, et une sortie pour le fluide caloporteur 16, pour la sortie du fluide caloporteur hors de la cuve externe 4.

Une parmi l'entrée pour le fluide caloporteur 14 et la sortie pour le fluide caloporteur 16 est située en haut de la cuve externe 4, l'autre étant située en bas.

De préférence, comme dans l'exemple illustré, l'entrée pour le fluide caloporteur 14 est située en bas de la cuve externe 4 et la sortie pour le fluide caloporteur 16 est située en haut de la cuve externe 4.

La cuve interne 8 comprend une entrée pour les eaux usées 18 et une sortie pour les eaux usées 20. Selon l'invention, l'entrée pour les eaux usées 18 est située en haut de la cuve interne 8 et la sortie pour les eaux usées 20 est située en bas de la cuve interne 8.

Le système de récupération de chaleur 2 possède un conduit d'entrée 22 pour les eaux usées alimentant l'entrée pour les eaux usées 18, et un conduit de sortie 24 pour les eaux usées alimenté par la sortie pour les eaux usées 20. Le conduit de sortie 24 remonte à partir de la sortie pour les eaux usées 20, de manière à former un siphon.

Le système de récupération de chaleur 2 comprend une rampe 26 de canalisation disposée entre la paroi latérale 6 de la cuve externe 4 et la paroi latérale 10 de la cuve interne 8 de manière à délimiter, dans l'espace de rétention 8, un conduit de circulation 28 pour la circulation du fluide caloporteur, le conduit de circulation 28 s'étendant en hélice autour de la cuve interne 8, depuis l'entrée pour le fluide caloporteur 14 vers la sortie pour le fluide caloporteur 16.

La rampe 26 est agencée de manière que le fluide caloporteur entrant dans la cuve externe 4 par l'entrée pour le fluide caloporteur 14, circule de l'entrée pour le fluide caloporteur 14 vers la sortie pour le fluide caloporteur 16 en passant par le conduit de canalisation 28.

Ce faisant, en fonctionnement, le fluide caloporteur circule en hélice autour de la cuve interne 8. La longueur du trajet du fluide caloporteur est augmentée par rapport à un trajet essentiellement vertical entre l'entrée pour le fluide caloporteur 14 et la sortie pour le fluide caloporteur 16. Ceci favorise les échanges thermiques entre le fluide caloporteur et les eaux usées.

Le conduit de circulation 28 est délimité par la rampe 26, la paroi latérale 6 de la cuve externe 4 et la paroi latérale 10 de la cuve interne 8.

La rampe 26 et le conduit de circulation 28 s'étendent en hélice autour de la cuve interne 8, suivant l'axe longitudinal L.

La rampe 26 comprend plusieurs spires. Chaque spire du conduit de circulation 28 est délimitée verticalement entre deux spires consécutives de la rampe 26.

Le conduit de circulation 28 comprend une ou plusieurs spires. Le conduit de circulation 28 comprend ici trois spires. Dans d'autres exemples de réalisation, le conduit de circulation 28 peut comprendre une seule spire, deux spires ou plus de trois spires.

La rampe 26 est ici formée par une plaque ayant un bord externe 26A fixé sur la paroi latérale 6 de la cuve externe 4, et un bord interne 26B fixée sur la paroi latérale 10 de la cuve interne 8.

Le bord externe 26A de la rampe 26 est ici formé de tronçons rectilignes pour suivre la paroi latérale 8 de la cuve externe 4, qui est ici de section transversale polygonale.

Le bord interne 26B de la rampe 26 est ici arrondi pour suivre la paroi latérale 10 de cuve interne 8, qui est de section transversale circulaire.

La cuve externe 4 possède un volume utile, pour la rétention du fluide caloporteur, qui est sensiblement égal à la différence entre le volume interne de la cuve externe 4 et le volume externe occupé par la cuve interne 8.

La cuve externe 4 est dimensionnée pour que le volume utile soit important en regard du débit du fluide caloporteur en cours de fonctionnement, de sorte que du fluide caloporteur est retenu dans la cuve externe 4, en étant accumulé en excès dans la cuve externe 4 comparativement au débit de fluide caloporteur. Le fluide caloporteur séjourne donc dans la cuve externe 4, ce qui favorise les échanges de chaleur avec les eaux usées contenues dans la cuve interne 8.

En particulier, le rapport du volume utile de la cuve externe 4 sur la longueur du conduit de circulation 28 entre l'entrée pour le fluide caloporteur 14 et la sortie pour le fluide caloporteur 16 est strictement supérieur à l'aire de la section transversale de l'entrée pour le fluide caloporteur 14.

Ainsi, la vitesse linéaire d'écoulement du fluide caloporteur dans le conduit de circulation 28 est strictement inférieure à celle du fluide caloporteur dans l'entrée pour le fluide caloporteur 14. Le ralentissement du fluide caloporteur favorise les échanges thermiques avec les eaux usées contenues dans la cuve externe 4.

Comme visible sur la Figure 2, la paroi latérale 6 de la cuve externe 4 et la paroi latérale 10 de la cuve interne 8 possèdent des sections transversales de formes différentes.

Il en résulte que le conduit de circulation 28 présente une largeur variable sur chaque spire du conduit de circulation 28.

Les zones les plus larges du conduit de circulation 28 définissent des zones de ralentissement de la vitesse d'écoulement du fluide caloporteur et de stockage de fluide caloporteur.

En particulier, dans l'exemple illustré, la cuve externe 4 de section transversale polygonale, et en particulier carré, offre des zones de stockage de fluide caloporteur dans les coins de la cuve externe 4, où le fluide caloporteur circule à faible vitesse.

On notera que, la cuve externe 4 de section transversale polygonale, et en particulier carré, facilite l'intégration du système de récupération de chaleur 2 dans un ensemble plus complexe, tout en préservant la compacité du système de récupération de chaleur 2.

La cuve interne 8 possède un fond 30 qui est incliné vers une ouverture de vidange 32. Le fond 30 de la cuve interne 8 est ici conique, et converge de l'extrémité inférieure de la paroi latérale 10 de la cuve interne 8 vers l'ouverture de vidange 32.

Le système de récupération de chaleur 2 comprend une vanne de vidange 34 agencée pour commander le débit d'eaux usées à travers l'ouverture de vidange 32.

La sortie pour les eaux usées 20 est ici formée dans le fond 30 de la cuve interne 8, à proximité de l'extrémité inférieure de la paroi latérale 10 de la cuve interne 8.

La cuve externe 4 possède ici un fond 36 plat et sensiblement horizontal.

Le système de récupération de chaleur 2 comprend un dispositif de nettoyage 38 configuré pour le nettoyage de l'intérieur de la cuve interne 8.

Le dispositif de nettoyage 38 comprend par exemple un ou plusieurs buses de nettoyage 40, chaque buse de nettoyage 40 étant disposée pour asperger un fluide de nettoyage à l'intérieur de la cuve interne 8, et un conduit d'alimentation 42 configuré pour alimenter chaque buse de nettoyage 40 en fluide de nettoyage à partir d'une source (non représentée).

Chaque buse de nettoyage 40 est montée à demeure à l'intérieur de la cuve interne 8 pour pouvoir réaliser des nettoyages en cours d'utilisation sans avoir à ouvrir la cuve interne 8.

Le dispositif de nettoyage 38 comprend par exemple plusieurs buses de nettoyage 40 agencées le long du conduit d'alimentation 42. Les buses de nettoyage 40 sont ici au nombre de trois.

Le système de récupération de chaleur 2 comprend un couvercle 44 commun fermant conjointement la cuve externe 4 et la cuve interne 8 reçue à l'intérieur de la cuve externe 4.

En fonctionnement, les eaux usées circulent dans la cuve interne 8. La cuve interne 8 présente un volume important en regard du débit des eaux usées, de sorte que les eaux usées sont retenues dans la cuve interne 8.

Le fluide caloporteur circule dans la cuve externe 4 en s'écoulant depuis l'entrée pour le fluide caloporteur vers la sortie pour le fluide caloporteur en suivant le conduit. Le conduit 28 s'étendant en hélice autour de la cuve interne 8 force le fluide caloporteur à circuler le long de la paroi latérale de la cuve interne 8 pour un meilleur échange de chaleur.

La cuve externe 4 est par exemple reliée fluidiquement à un circuit de fluide caloporteur pour la circulation du fluide caloporteur, le circuit de fluide caloporteur comprenant en outre au moins un échangeur de chaleur pour un échange de chaleur entre le fluide caloporteur et un autre fluide.

Dans un exemple, l'échangeur de chaleur est couplé thermiquement à un circuit de pompe à chaleur, le fluide caloporteur, et donc indirectement les eaux usées, étant utilisé comme source chaude pour la pompe à chaleur.

Une telle pompe à chaleur peut être utilisée par exemple pour le chauffage du bâtiment dont les eaux usées alimentent le système de récupération de chaleur 2.

Le système de récupération de chaleur 2 permet une récupération efficace de chaleur des eaux usées au moyen d'un fluide caloporteur.

La rétention du fluide caloporteur dans une cuve externe 4 de rétention dans laquelle est plongée une cuve interne 8 de rétention des eaux usées permet un échange thermique efficace à travers la paroi latérale de la cuve interne 8.

Le conduit de circulation force le fluide caloporteur à tourner autour de la cuve interne 8 pour améliorer l'échange de chaleur.

Le conduit de circulation définit entre les parois latérales de la cuve interne 8 et de la cuve externe 4 peut présenter une section transversale permettant une circulation lente du fluide caloporteur autour de la cuve interne 8, propice à des échanges de chaleur efficaces.

Le système de récupération de chaleur 2 peut être fabriqué facilement et à faible coût.

La cuve interne 8 de rétention des eaux usées définit un réservoir tampon dans lequel les eaux usées sont retenues. Elles y résident donc pendant un certain temps, ce qui est favorable à la récupération de la chaleur contenue dans ces eaux usées, contrairement à un système de récupération de chaleur formé par un conduit dans lequel les eaux usées circulent sans y être retenues.

Le système de récupération de chaleur 2 est configuré de sorte que les eaux usées circulent dans la cuve interne 8 par effet de siphon. Une quantité d'eaux usées située au fond de la cuve interne 8 sort de la cuve interne 8 par le bas lorsqu'une quantité correspondent rentre dans la cuve interne 8 par le haut de la cuve interne 8. Cela est réalisé grâce au conduit de sortie 24 remontant à partir de la sortie 20 pour former un siphon.

Le système de récupération de chaleur 2 est configuré de sorte que les eaux usées les plus chaudes restent en haut et les eaux les plus froides restent en bas de la cuve interne 8.

Les eaux usées les plus chaudes sont retenues en haut de la cuve interne 8 tandis que les eaux usées les plus froides sont évacuées plus rapidement par le bas de la cuve interne 8, notamment du fait de la circulation par effet de siphon. Ceci favorise la récupération de chaleur.

Le fluide caloporteur circulant dans la cuve externe 4 est également retenu dans cette cuve externe 4 ce qui favorise la récupération de la chaleur des eaux usées.

Le fluide caloporteur circulant dans un circuit de fluide caloporteur possédant un échangeur de chaleur pour un échange de chaleur avec un autre fluide (par exemple un fluide frigorigène d'une pompe à chaleur ou de l'eau sanitaire d'un circuit d'eau sanitaire) n'est pas en contact avec les eaux usées, ni avec l'autre fluide.

Le système de récupération des eaux usées 2 limite les risques de pollution. Il est de conception sanitaire.

La cuve interne 8 équipée d'une vanne de vidange 34 et d'un dispositif de nettoyage 38 est facile d'entretien.

## Revendications

1. Système de récupération de chaleur (2) des eaux usées par échange de chaleur entre les eaux usées et un fluide caloporteur, le système de récupération de chaleur (2) comprenant :
- une cuve externe (4) de rétention du fluide caloporteur, la cuve externe (4) possédant une paroi latérale (6), la cuve externe (4) possédant une entrée pour le fluide caloporteur (14) et une sortie pour le fluide caloporteur (16), l'une située en haut de la cuve externe (4), et l'autre située en bas de la cuve externe (4),
- une cuve interne (8) de rétention des eaux usées, la cuve interne (8) possédant une paroi latérale (10), la cuve interne (8) étant disposée à l'intérieur de la cuve externe (4) pour un échange de chaleur entre le fluide caloporteur et les eaux usées à travers la paroi latérale (10) de la cuve interne (8), un espace de rétention annulaire étant délimité entre la paroi latérale (6) de la cuve externe (4) et la paroi latérale (10) de la cuve interne (8), et
- une rampe (26) de canalisation disposée entre la paroi latérale (6) de la cuve externe (4) et la paroi latérale (10) de la cuve interne (8) de manière à délimiter, dans l'espace de rétention, un conduit de circulation (28) s'étendant en hélice autour de la cuve interne (8), pour la circulation du fluide caloporteur depuis l'entrée pour le fluide caloporteur (14) vers la sortie pour le fluide caloporteur (16)
dans lequel la cuve interne (8) possède une entrée pour les eaux usées (18) et une sortie pour les eaux usées (20) située en bas de la cuve interne (8), le système de récupération de chaleur possédant un conduit d'entrée (22) pour les eaux usées alimentant l'entrée pour les eaux usées (18), et un conduit de sortie (24) pour les eaux usées alimenté par la sortie pour les eaux usées (20), le conduit de sortie (24) remontant à partir de la sortie pour les eaux usées (20) de manière à former un siphon,
le système étant **caractérisé en ce que** l'entrée pour les eaux usées (18) est située en haut de la cuve interne (8).

2. Système de récupération de chaleur selon la revendication 1, dans lequel la paroi latérale (10) de la cuve interne (8) est de section transversale circulaire.

3. Système de récupération de chaleur selon la revendication 1 ou la revendication 2, dans lequel la cuve interne (8) possède un fond (30) incliné vers une ouverture de vidange (32).

4. Système de récupération de chaleur selon la revendication 3, dans lequel le fond (30) est conique et converge d'une extrémité inférieure de la paroi latérale (10) de la cuve interne (8) vers l'ouverture de vidange (32).

5. Système de récupération de chaleur selon la revendication 3 ou 4, dans lequel la sortie pour les eaux usées (20) est formée dans le fond (30) de la cuve interne (8), à proximité d'une extrémité inférieure de la paroi latérale (10) de la cuve interne (8).

6. Système de récupération de chaleur selon l'une quelconque des revendications précédentes, comprenant un dispositif de nettoyage (38) comprenant au moins une buse de nettoyage (40) pour l'aspersion d'un fluide de nettoyage à l'intérieur de la cuve interne (8).

7. Système de récupération de chaleur selon l'une quelconque des revendications précédentes, comprenant une vanne de vidange (34) agencée pour commander la vidange de la cuve interne (8).

8. Système de récupération de chaleur selon l'une quelconque de revendications 1 à 5, comprenant une vanne de vidange (34) agencée pour commander le débit d'eau usées à travers l'ouverture de vidange (32).

9. Système de récupération de chaleur selon l'une quelconque des revendications précédentes, dans lequel la paroi latérale (6) de la cuve externe (4) possède une section transversale polygonale.

10. Système de récupération de chaleur selon l'une quelconque des revendications précédentes, dans lequel la paroi latérale (6) de la cuve externe (4) possède une section quadrangulaire.

11. Système de récupération de chaleur selon l'une quelconque des revendications précédentes, dans lequel la paroi latérale (10) de la cuve interne (8) et la paroi latérale (6) de la cuve externe (4) présentent des sections transversales de formes différentes.

## Patentansprüche

1. Wärmerückgewinnungssystem (2) aus Brauchwasser durch Wärmeaustausch zwischen dem Brauchwasser und einem Wärmeträgerfluid, das Wärmerückgewinnungssystem (2) umfassend:
- einen äußeren Behälter (4) zum Enthalten des Wärmeträgerfluids, wobei der äußere Behälter (4) eine Seitenwand (6) besitzt, wobei der äußere Behälter (4) einen Einlass für das Wärmeträgerfluid (14) und einen Auslass für das Wärmeträgerfluid (16) besitzt, wovon sich einer an einer Oberseite des äußeren Behälters (4) befindet und sich der andere an einer Unterseite des äußeren Behälters (4) befindet,
- einen inneren Behälter (8) zum Enthalten des Brauchwassers, wobei der innere Behälter (8) eine Seitenwand (10) besitzt, wobei der innere Behälter (8) für einen Wärmeaustausch zwischen dem Wärmeträger und dem Brauchwasser über die Seitenwand (10) des inneren Behälters (8) im Innern des äußeren Behälters (4) angeordnet ist, wobei ein ringförmiger Rückhalteraum zwischen der Seitenwand (6) des äußeren Behälters (4) und der Seitenwand (10) des inneren Behälters (8) begrenzt ist, und
- eine Kanalrampe (26), die zwischen der Seitenwand (6) des äußeren Behälters (4) und der Seitenwand (10) des inneren Behälters (8) angeordnet ist, um in dem Rückhalteraum eine Zirkulationsleitung (28) zu begrenzen, die sich für die Zirkulation des Wärmeträgerfluids von dem Einlass für das Wärmeträgerfluid (14) zu dem Auslass für das Wärmeträgerfluid (16) spiralförmig um den inneren Behälter (8) erstreckt
wobei der innere Behälter (8) einen Einlass für das Brauchwasser (18) und einen Auslass für das Brauchwasser (20), der sich an einer Unterseite des inneren Behälters (8) befindet, aufweist, wobei das Wärmerückgewinnungssystem eine Einlassleitung (22) für das Brauchwasser, die den Einlass für das Brauchwasser (18) speist, und eine Auslassleitung (24) für das Brauchwasser aufweist, die von dem Auslass für das Brauchwasser (20) gespeist wird, wobei die Auslassleitung (24) von dem Auslass für das Brauchwasser (20) aufwärts verläuft, um einen Siphon zu bilden,
wobei das System **dadurch gekennzeichnet ist, dass** sich der Einlass für das Brauchwasser (18) an einer Oberseite des inneren Behälters (8) befindet.

2. Wärmerückgewinnungssystem nach Anspruch 1, wobei die Seitenwand (10) des inneren Behälters (8) von kreisförmigem Querschnitt ist.

3. Wärmerückgewinnungssystem nach Anspruch 1 oder Anspruch 2, wobei der innere Behälter (8) einen Boden (30) besitzt, der zu einer Entleerungsöffnung (32) hin geneigt ist.

4. Wärmerückgewinnungssystem nach Anspruch 3, wobei der Boden (30) konisch ist und von einem unteren Ende der Seitenwand (10) des inneren Behälters (8) zu der Entleerungsöffnung (32) hin konvergiert.

5. Wärmerückgewinnungssystem nach Anspruch 3 oder 4, wobei der Auslass für das Brauchwasser (20) in dem Boden (30) des inneren Behälters (8) in der Nähe eines unteren Endes der Seitenwand (10) des inneren Behälters (8) gebildet ist.

6. Wärmerückgewinnungssystem nach einem der vorherigen Ansprüche, umfassend eine Reinigungsvorrichtung (38), umfassend mindestens eine Reinigungsdüse (40) zum Sprühen eines Reinigungsfluids im Inneren des inneren Behälters (8).

7. Wärmerückgewinnungssystem nach einem der vorherigen Ansprüche, umfassend ein Entleerungsventil (34), das angeordnet ist, um die Entleerung des inneren Behälters (8) zu steuern.

8. Wärmerückgewinnungssystem nach einem der Ansprüche 1 bis 5, umfassend ein Entleerungsventil (34), das angeordnet ist, um den Durchfluss von Brauchwasser durch die Entleerungsöffnung (32) zu steuern.

9. Wärmerückgewinnungssystem nach einem der vorherigen Ansprüche, wobei die Seitenwand (6) des äußeren Behälters (4) einen polygonalen Querschnitt besitzt.

10. Wärmerückgewinnungssystem nach einem der vorherigen Ansprüche, wobei die Seitenwand (6) des äußeren Behälters (4) einen viereckigen Querschnitt besitzt.

11. Wärmerückgewinnungssystem nach einem der vorherigen Ansprüche, wobei die Seitenwand (10) des inneren Behälters (8) und die Seitenwand (6) des äußeren Behälters (4) Querschnitte unterschiedlicher Formen aufweisen.

## Claims

1. A system (2) for recovering heat from wastewater by heat exchange between the wastewater and a heat transfer fluid, the heat recovery system (2) comprising:
- an external heat transfer fluid holding tank (4), the external tank (4) having a side wall (6), the external tank (4) having a heat transfer fluid inlet (14) and a heat transfer fluid outlet (16), one located at the top of the external tank (4), and the other located at the bottom of the external tank (4),
- an internal tank (8) for holding wastewater, the internal tank (8) having a side wall (10), the internal tank (8) being arranged inside the external tank (4) for an exchange of heat between the heat transfer fluid and the wastewater through the side wall (10) of the internal tank (8), an annular retention space being delimited between the side wall (6) of the external tank (4) and the side wall (10) of the internal tank (8), and
- a pipe ramp (26) arranged between the side wall (6) of the external tank (4) and the side wall (10) of the internal tank (8) so as to delimit, in the holding space, a circulation duct (28) extending helically around the internal tank (8), for the circulation of the heat transfer fluid from the heat transfer fluid inlet (14) to the heat transfer fluid outlet (16),
wherein the internal tank (8) has an inlet for wastewater (18) and an outlet for wastewater (20) located at the bottom of the internal tank (8), the heat recovery system having an inlet duct (22) for the wastewater supplying the wastewater inlet (18), and an outlet duct (24) for the wastewater supplied by the wastewater outlet (20), the outlet duct (24) rising from the wastewater outlet (20) so as to form a siphon,
the system being **characterized in that** the wastewater inlet (18) is located at the top of the internal tank (8).

2. The heat recovery system according to claim 1, wherein the side wall (10) of the internal tank (8) is of circular cross-section.

3. The heat recovery system according to claim 1 or claim 2, wherein the internal tank (8) has a bottom (30) inclined toward a drain opening (32).

4. The heat recovery system according to claim 3, wherein the bottom (30) is conical and converges from a lower end of the side wall (10) of the internal tank (8) toward the drain opening (32).

5. The heat recovery system according to claim 3 or 4, wherein the wastewater outlet (20) is formed in the bottom (30) of the internal tank (8), proximate to a lower end of the side wall (10) of the internal tank (8).

6. The heat recovery system according to any one of the preceding claims, comprising a cleaning device (38) comprising at least one cleaning nozzle (40) for spraying a cleaning fluid inside the internal tank (8).

7. The heat recovery system according to any one of the preceding claims, comprising a drain valve (34) arranged to control the emptying of the internal tank (8).

8. The heat recovery system according to any one of claims 1 to 5, comprising a drain valve (34) arranged to control the wastewater flow rate through the drain opening (32).

9. The heat recovery system according to any one of the preceding claims, wherein the side wall (6) of the external tank (4) has a polygonal cross-section.

10. The heat recovery system according to any one of the preceding claims, wherein the side wall (6) of the external tank (4) has a quadrangular cross-section.

11. The heat recovery system according to any one of the preceding claims, wherein the side wall (10) of the internal tank (8) and the side wall (6) of the external tank (4) have cross-sections of different shapes.
